# EUROPÄISCHE PATENTSCHRIFT

(11) **EP 2 945 818 B1**
(45) Veröffentlichungstag und Bekanntmachung des Hinweises auf die Patenterteilung: **15.03.2017**
(21) Anmeldenummer: 14701942.6
(22) Anmeldetag: 16.01.2014
(51) Int. Cl.: B60N 2/64, B60N 2/16, B60N 2/28, B60N 2/44, B60R 22/26, B60R 21/207, B60N 2/01, B60N 2/02

(54) **KRAFTFAHRZEUG**
MOTOR VEHICLE
VÉHICULE AUTOMOBILE

(30) Priorität: 18.01.2013 DE 102013200812
(43) Veröffentlichungstag der Anmeldung: 25.11.2015
(73) Patentinhaber: Bayerische Motoren Werke Aktiengesellschaft, 80809 München (DE)
(72) Erfinder: BRUNS, Hans-Heiner, 80935 München (DE)
(86) Internationale Anmeldenummer: PCT/EP2014/050827
(87) Internationale Veröffentlichungsnummer: WO 2014/111479

(56) Entgegenhaltungen:
- DE-A1-102006 059 722
- FR-A1- 2 961 760

## Beschreibung

Die Erfindung betrifft ein Kraftfahrzeug gemäß dem Oberbegriff des Anspruchs 1 (siehe z.B. die DE 10 2008 028 353 A1).

Aus der DE 10 2006 059 722 A1 ist bereits ein Rücksitzreihe mit drei Sitzplätzen bekannt. Ein mittlerer Sitzplatz ist aus einer hinteren Sitzposition in eine vordere Sitzposition bewegbar.

Aus der o.g. DE 10 2008 028 353 A1 ist ein Kraftfahrzeugsitz bekannt, bei dem einstellbare Seitenwangen vorgesehen sind. Zur Verstellung der Seitenwangen sind aufblasbare Kammern vorgesehen.

Aus der DE 10 2007 037 378 A1 ist ein Kraftfahrzeug mit einer Seitenwangenverstellung bekannt. Die Verstellung der Seitenwangen erfolgt über jeweils ein Verstellelement, das hydraulisch, mechanisch, pneumatisch, elektrisch oder magnetisch betätigt sein kann.

Aus der DE 10 2007 045 552 A1 ist ein Kraftfahrzeugsitz bekannt, bei dem im Bereich der Seitenwangen mindestens ein Airbag vorgesehen ist.

Aus der DE 42 44 377 A1 ist eine Rücksitzbank dargestellt, auf der die Anordnung von zwei Kindersitzen möglich ist. Zwischen den beiden Kindersitzen verbleibt ein Zwischenraum, der nicht für einen dritten Kindersitz nutzbar ist.

Aus der EP 0 979 752 A2 ist ein Fahrzeugsitz bekannt, der eine so genannte ISO-FIX-Anbindung aufweist.

Aufgabe der Erfindung ist es, ein Kraftfahrzeug zu schaffen, bei dem an einer zweiten Sitzreihe und/oder weiteren hinteren Sitzreihe jeweils drei oder mehr Kindersitze nebeneinander angeordnet werden können.

Diese Aufgabe wird durch die Merkmale des Anspruchs 1 gelöst.

Ein erfindungsgemäßes Kraftfahrzeug weist eine Karosserie mit einer Fahrgastzelle mit einem Fahrzeuginnenraum auf. An einem Boden des Fahrzeuginnenraumes sind mindestens ein vorderer Sitz und mindestens eine hintere Sitzreihe vorgesehen. Die hintere Sitzreihe weist mindestens zwei Sitzplätze auf. Die vorhandenen Sitzplätze der hinteren Sitzreihe bestehen jeweils aus einem Sitzteil mit Sitzflächen und aus einer Rückenlehne mit Anlehnflächen. An seitlichen Enden der hinteren Sitzreihe ist jeweils eine Seitenwange ausgebildet, wobei zwischen den zwei Sitzflächen jeweils ein mittlerer Sitzflächenabschnitt vorgesehen ist.

Erfindungsgemäss sind die beiden Sitzflächen aus einer abgesenkten Position in eine angehobene Position und zurück verschiebbar, wobei die beiden gegebenenfalls vorhandenen Seitenwangen aus einer angehobenen Position in eine abgesenkte Position und der mittlere Sitzflächenabschnitt aus einer angehobenen Position in eine abgesenkte Position bewegbar sind, so dass die nach oben gerichteten Außenflächen der Seitenwangen, die nach oben gerichteten Außenflächen der Sitzflächen und die nach oben gerichtete Außenfläche des mittleren Sitzflächenabschnittes eine ebene Sitzfläche der Sitzbank bilden.

In einer vorteilhaften Ausführungsform sind die Gurtschlösser, die Gurte, die Gurtaufroller und die Befestigungsvorrichtungen für die Kindersitze aus einer jeweiligen Position bei einer unebenen Sitzfläche in entsprechende Positionen einer ebenen Sitzfläche der Sitzbank und zurück verschiebbar.

In den gegebenenfalls vorhandenen Seitenwangen ist in einer vorteilhaften Ausführungsform jeweils mindestens ein Airbag angeordnet.

Eine Ausführungsform der Erfindung wird nachstehend anhand der Zeichnungen beispielshalber beschrieben. Dabei zeigen:
- Fig. 1: eine schematische Darstellung einer hinteren Sitzreihe, bei der aufgrund der Ausbildung von zwei tiefer gelegenen Sitzflächen zwei Kindersitze angeordnet werden können,
- Fig. 2: eine schematische Ansicht einer hinteren Rücksitzreihe entsprechend der Fig. 1, wobei durch eine Anhebung der beiden tiefer gelegenen Sitzflächen auf eine gemeinsame Höhe, in der sich eine ebene Sitzfläche über die gesamte Breite der hinteren Sitzreihe ergibt, die Anordnung von drei Kindersitzen möglich ist,
- Fig. 3: eine schematische Ansicht einer hinteren Sitzreihe entsprechend der Ausbildung in der Fig. 1, wobei in der Fig. 3 die Anordnung von drei Gurtaufrollern und entsprechend drei Gurtschlössern, sowie ISO-FIX-Befestigungspunkten für die Anordnung von zwei Kindersitzen gezeigt ist,
- Fig. 4: eine schematische Darstellung einer hinteren Sitzreihe entsprechend der Fig. 2, wobei in der Fig. 4 die jeweils zwei ISO-FIX-Befestigungspunkte für den Kindersitz jeweils nach außen und nach oben verschoben sind und wobei die drei Gurtschlösser in ihrer Lage angehoben und so seitlich verschoben sind, dass ein in der Mitte angeordneter Kindersitz über den mittleren Gurt und das dazu gehörige Gurtschloss befestigbar sind und
- Fig. 5: eine schematische Darstellung einer hinteren Sitzreihe entsprechend der Fig. 4, wobei zusätzlich zu der in der Fig. 4 gezeigten Anordnung eine linke Seitenwange bedingt durch einen Seitenaufprall angehoben ist.

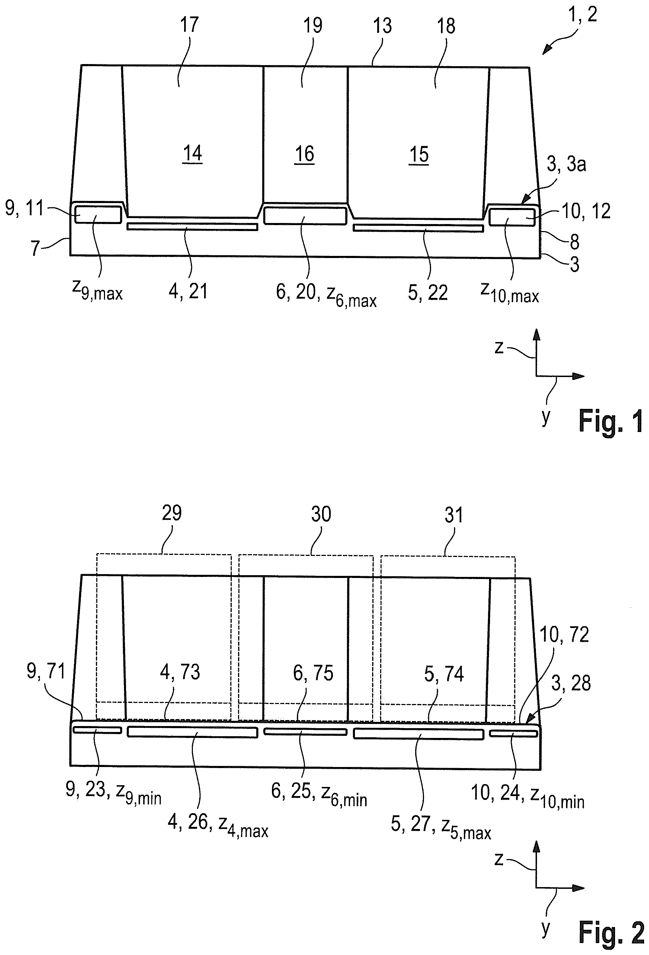

Die Fig. 1 zeigt eine schematische Darstellung einer hinteren Sitzreihe 2 eines nicht weiter dargestellten Kraftfahrzeuges 1. In der gezeigten Ausführungsform besteht die hintere Sitzreihe 2 aus einer Sitzbank 3 mit zwei tiefer liegenden Sitzflächen 4 und 5. Die beiden Sitzflächen 4 und 5 sind durch einen mittleren Sitzflächenabschnitt 6 voneinander beabstandet. Der mittlere Sitzflächenabschnitt 6 ist in der Regel schmaler als die beiden Sitzflächen 4 und 5.

An den beiden seitlichen Enden 7, 8 der Sitzbank 3 ist jeweils eine höhenverstellbare Seitenwange 9, 10 ausgebildet. An die Sitzbank 3 schließt sich eine Rückenlehne 13 an. Die Rückenlehne 13 kann teilbar oder nicht teilbar ausgebildet sein.

In der gezeigten Ausführungsform ist der jeweiligen Sitzfläche 4 und 5 der Sitzbank 3 jeweils eine Anlehnfläche 14, 15 der Rückenlehne 13 zugeordnet. Dem mittleren Sitzflächenabschnitt 6 ist eine Anlehnfläche 16 zugeordnet. Somit ergeben sich zwei äußere, seitliche Sitze 17 und 18 sowie ein Mittelsitz 19. Eine Anordnung von Kindersitzen ist nur auf den beiden tiefer liegenden Sitzflächen 4 und 5 möglich.

In der Fig. 1 befinden sich die beiden Seitenwangen 9, 10 jeweils in einer maximal angehobenen oder nach oben verstellbaren Position 11, 12 und auch der mittlere, höhenverstellbare Sitzflächenabschnitt 6 ist in eine maximal angehobene Position 20 verstellt. Die beiden Sitzflächen 4 und 5 befinden sich in der Fig. 1 in jeweils einer maximal abgesenkten Position 21 und 22. Die Sitzbank 3 weist somit eine unebene Sitzfläche 3a auf.

In der Fig. 2 sind die gezeigten Sitzflächen 4 und 5 durch eine nicht dargestellte Vorrichtung um eine Höhe Z_{4,max}, Z_{5,max} nach oben verschoben, während die beiden Seitenwangen 9 und 10 sowie der mittlere Sitzflächenabschnitt 6 in eine Minimalposition um eine Höhe Z_{6,min} Z_{9,min}, Z_{10,min} abgesenkt sind.

In der Fig. 2 befinden sich die beiden Seitenwangen 9 und 10 sowie der mittlere Sitzflächenabschnitt 6 in einer maximal abgesenkten Position 23, 24 und 25. Die beiden Sitzflächen 4 und 5 sind in eine maximal angehobene Position 26, 27 nach oben verschoben.

Die Absenkung der beiden Seitenwangen 9, 10 und des mittleren Sitzflächenabschnittes 6 sowie die Anhebung der beiden Sitzflächen 4 und 5 erfolgt so, dass sich eine in der Fig. 2 gezeigte ebene Sitzfläche 28 der Sitzbank 3 ergibt. Auf dieser ebenen Sitzfläche 28 der Sitzbank 3 können somit drei Kindersitze 29, 30, 31 nebeneinander angeordnet werden, wie dies in strichlierten Linien in der Fig. 2 gezeigt ist.

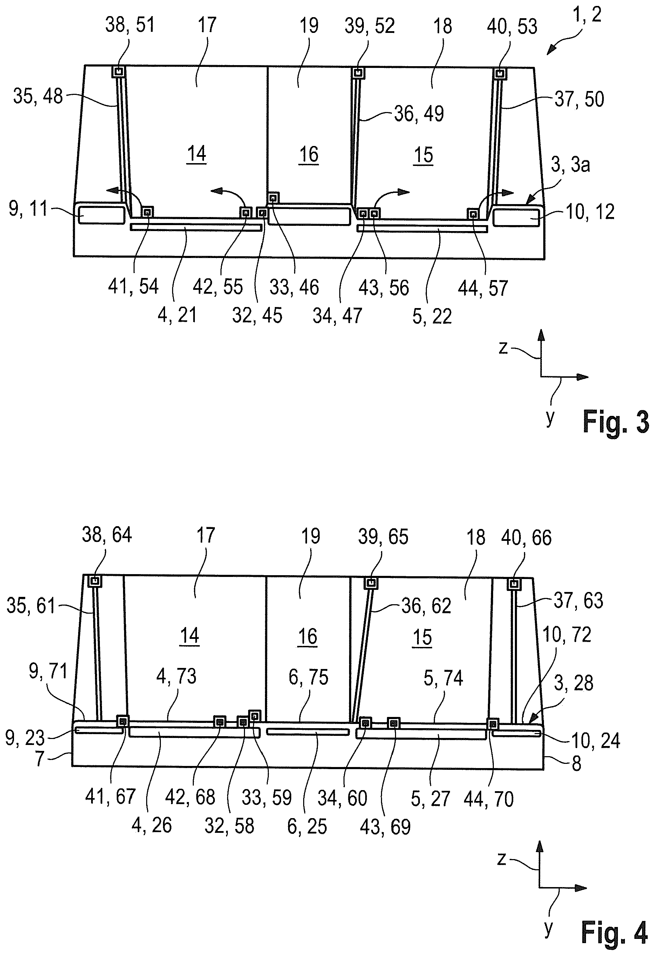

In den Fig. 3 bis 5 ist die Anordnung und Verschiebbarkeit der drei vorhandenen Gurtschlösser 32, 33, 34 für die drei Gurte 35, 36, 37 und die drei Gurtaufroller 38, 39, 40 für die drei Gurte 35, 36, 37 gezeigt. Ferner ist in den Fig. 3 bis 5 eine Verschiebbarkeit von jeweils zwei (ISO-FIX)-Befestigungspunkten 41, 42 sowie 43 und 44 dargestellt.

Die Fig. 3 zeigt einen Zustand, bei dem sich die beiden Sitzflächen 4 und 5 entsprechend der Fig. 1 in der abgesenkten Position 21, 22 befinden. Bei der Anhebung der Sitzflächen 4 und 5 in die in der Fig. 2 gezeigte, jeweilige maximal angehobene Position 26, 27 bei gleichzeitiger Absenkung der Seitenwangen 9, 10 in die unterste Position 23, 24 erfolgt eine Verschiebung der Lage der Gurtschlösser 32, 33, 34, eine Verschiebung der Lage der Gurte 35, 36, 37, eine Verschiebung der Lage der Gurtaufroller 38, 39, 40 und eine Verschiebung der Lage der ISO-FIX-Befestigungsvorrichtungen 41, 42 und 43, 44 von den in den in der Fig. 3 gezeigten jeweiligen Positionen 45, 46, 47 für die Gurtschlösser 32, 33, 34, von den in den in der Fig. 3 gezeigten jeweiligen Positionen 48, 49, 50 für die Gurte 35, 36, 37, von den in den in der Fig. 3 gezeigten jeweiligen Positionen 51, 52, 53 für die Gurtaufroller 38, 39, 40, von den in den in der Fig. 3 gezeigten jeweiligen Positionen 54, 55, sowie 56, 57 für die ISO-FIX-Befestigungsvorrichtungen 43, 44 in die in der Fig. 4 gezeigten Positionen 58, 59, 60 für die Gurtschlösser 32, 33, 34, in die in der Fig. 4 gezeigten jeweiligen Positionen 61, 62, 63 für die Gurte 35, 36, 37, in die in der Fig. 4 gezeigten jeweiligen Positionen 64, 65, 66 für die Gurtaufroller 38, 39, 40, in die in der Fig. 4 gezeigten jeweiligen Positionen 67, 68 sowie 69 und 70 für die jeweiligen (ISO-FIX)-Befestigungsvorrichtungen 41, 42 sowie 43 und 44.

Die nach oben gerichteten Außenflächen 71, 72 der Seitenwangen 9, 10, die nach oben gerichteten Außenflächen 73, 74 der Sitzflächen 4, 5 und die nach oben gerichtete Außenfläche 75 des mittleren Sitzflächenabschnittes 6 bilden somit eine ebene Sitzfläche 28 der Sitzbank 3.

Wie aus einem Vergleich der Fig. 3 und 4 hervorgeht, wird der Gurt 35 nach links in Richtung des äußeren, seitlichen Endes 7 der Sitzbank 3 verschoben. Entsprechend bewegt sich das Gurtschloss 32 nach links und um einen vorgegebenen Betrag nach oben. Der Gurtaufroller 38 bewegt sich ebenfalls nach links.

Der Gurt 36 für den Mittelsitz 19 bewegt sich nach rechts zusammen mit dem Gurtaufroller 39. Entsprechend verschiebt sich das Gurtschloss 33 nach links. Der Gurt 37 bewegt sich mit dem Gurtaufroller 40 nach rechts. Entsprechend bewegt sich das Gurtschloss 34 nach oben. Die Befestigungsvorrichtungen 41, 42 bewegen sich nach links in eine höhere Position.

Die (ISO-FIX)-Befestigungsvorrichtungen 43, 44 bewegen sich aus den tieferen Positionen 41, 42 sowie 43, 44 in die höheren Positionen 67, 68 sowie 69, 70 und um einen vorgegebenen Betrag nach rechts in Richtung des seitlichen Endes 8 der Sitzbank 3.

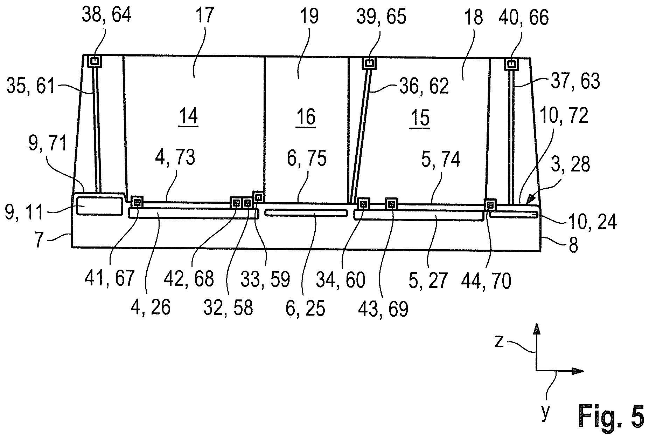

Die Fig. 5 zeigt einen Zustand, bei dem im Unterschied zu dem in der Fig. 4 gezeigten Zustand die linke Seitenwange 9 beispielsweise durch einen Seitenaufprall aktiviert und aufgeblasen oder bewegt wurde und sich dadurch der angehobenen Position 11 befindet.

## Patentansprüche

1. Kraftfahrzeug mit einer Karosserie, die eine Fahrgastzelle mit einem Fahrzeuginnenraum aufweist, wobei an einem Boden des Fahrzeuginnenraumes mindestens ein vorderer Sitz und mindestens eine hintere Sitzreihe vorgesehen sind, wobei die jeweilige hintere Sitzreihe mindestens zwei Sitzplätze aufweist, wobei der jeweilige Sitzplatz aus einem Sitzteil mit Sitzflächen (4, 5) und aus einer Rückenlehne mit Anlehnflächen (14, 15) besteht, wobei an seitlichen Enden (7, 8) der hinteren Sitzreihe jeweils eine Seitenwange (9, 10) ausgebildet ist und wobei zwischen zwei Sitzflächen (4, 5) jeweils ein mittlerer Sitzflächenabschnitt (6) ausgebildet ist,
**dadurch gekennzeichnet, dass** die beiden Sitzflächen (4, 5) aus einer abgesenkten Position (21, 22) in eine angehobene Position (26, 27) und zurück verschiebbar sind und dass die beiden gegebenenfalls vorhandenen Seitenwangen (9, 10) aus einer angehobenen Position (11, 12) in eine abgesenkte Position (23, 24) und der mittlere Sitzflächenabschnitt (6) aus einer angehobenen Position (20) in eine abgesenkte Position (25) bewegbar sind, so dass die nach oben gerichteten Außenflächen (71, 72) der Seitenwangen (9, 10), die nach oben gerichteten Außenflächen (73, 74) der Sitzflächen (4, 5) und die nach oben gerichtete Außenfläche (75) des mittleren oder zwischen den Sitzflächen (4, 5) befindlichen Sitzflächenabschnittes (6) eine ebene Sitzfläche (28) der Sitzbank (3) bilden.

2. Kraftfahrzeug nach Anspruch 1,
**dadurch gekennzeichnet, dass** die Gurtschlösser (32, 33, 34), die Gurte (35, 36, 37), die Gurtaufroller (38, 39, 40) und die Befestigungsvorrichtungen (41, 42) sowie (43, 44) für die Kindersitze (29, 30, 31) aus einer jeweiligen Position (45, 46, 47), (48, 49, 50), (51, 52, 53), (54, 55; 56, 57) bei einer unebenen Sitzfläche (3a) in entsprechende Positionen (58, 59, 60; 61, 62, 63; 64, 65, 66; 67, 68; 69, 70) einer ebenen Sitzfläche (28) der Sitzbank (3) und zurück verschiebbar sind.

3. Kraftfahrzeug nach den Ansprüchen 1 oder 2,
**dadurch gekennzeichnet, dass** in den vorhandenen Seitenwangen (9, 10) jeweils mindestens ein Airbag angeordnet ist.

## Claims

1. A motor vehicle with a bodywork which has a passenger compartment with a vehicle interior, wherein provided on a floor of the vehicle interior is at least one front seat and at least one rear seat row, wherein the respective rear seat row has at least two seats, wherein the respective seat comprises a seat part with seat surfaces (4, 5) and a backrest with rest surfaces (14, 15), wherein a respective lateral support (9, 10) is formed on lateral ends (7, 8) of the rear seat row and a respective middle seat surface portion (6) is formed between two seat surfaces (4, 5),
**characterised in that** the two seat surfaces (4, 5) can be moved out of a lowered position (21, 22) into a raised position (26, 27) and back again, and **in that** the two optionally present lateral supports (9, 10) can be moved out of a raised position (11, 12) into a lowered position (23, 24) and the middle seat surface portion (6) can be moved out of a raised position (20) into a lowered position (25), so that the upwardly directed outer surfaces (71, 72) of the lateral supports (9, 10), the upwardly directed outer surfaces (73, 74) of the seat surfaces (4, 5) and the upwardly directed outer surface (75) of the seat surface portion (6), located in the middle or between the seat surfaces (4, 5), form a flat seat surface (28) of the bench seat (3).

2. A motor vehicle according to claim 1,
**characterised in that** the belt catches (32, 33, 34), the belts (35, 36, 37), the belt retractors (38, 39, 40) and the fastening devices (41, 42) and also (43, 44) for the child seats (29, 30, 31) can be moved out of a respective position (45, 46, 47), (48, 49, 50), (51, 52, 53), (54 55; 56, 57) when there is an uneven seat surface (3a) into corresponding positions (58, 59, 60; 61, 62, 63; 64, 65, 66; 67, 68; 69, 70) of a flat seat surface (28) of the bench seat (3), and back again.

3. A motor vehicle according to claim 1 or claim 2,
**characterised in that** at least one airbag is respectively arranged in the lateral supports (9, 10) which are present.

## Revendications

1. Véhicule automobile équipé d'une carrosserie comportant une cabinet de passagers ayant un habitacle, dans lequel, sur le plancher de l'habitacle sont installés au moins un siège avant et au moins une rangée de sièges arrière, chaque rangée de sièges arrière comportant au moins deux places assises, chacune des places assises étant constituée d'une partie de siège équipée de surfaces d'assise (4, 5) et d'un dossier équipé de surfaces d'appui (14, 15), aux extrémités latérales (7, 8) de la rangée de sièges arrière étant respectivement formée une joue latérale (9, 10), et entre deux surfaces d'assise (4, 5) étant respectivement formé un segment de surface d'assise médian (6),
**caractérisé en ce que**
les deux surfaces d'assise (4, 5) peuvent être déplacées d'une position abaissée (21, 22) dans une position relevée (26, 27) et vice versa, et les deux joues latérales (9, 10), le cas échéant présentes peuvent être déplacées d'une position relevée (11, 12) dans une position abaissée (23, 24) tandis que le segment de surface d'assise médian (6) peut être déplacé d'une position relevée (20) dans une position abaissée (25) de sorte que les surfaces externes orientées vers le haut (71, 72) des joues latérales (9, 10), les surfaces externes orientées vers le haut (73, 74) des surfaces d'assise (4, 5) et la surface externe (75) orientée vers le haut du segment de surface d'assise (6) médian ou situé entre les surfaces d'assise (4, 5) forment une surface d'assise plane (28) d'un banc (3).

2. Véhicule conforme à la revendication 1,
**caractérisé en ce que**
les boucles des ceintures de sécurité (32, 33, 34), les ceintures de sécurité (35, 36, 37), les enrouleurs des ceintures de sécurité (38, 39, 40) et les dispositifs de fixation (41, 42) ou (43, 44) de sièges d'enfants peuvent être déplacés d'une position respective (45, 46, 47), (48, 49, 50), (51, 52, 53), (54, 55, 56, 57) dans le cas d'une surface d'assise (3a) non plane dans des positions correspondantes (58, 59, 60, 61, 62, 63, 64, 65, 66, 67, 68, 69, 70) d'une surface d'assise plane (28) du banc (3) et inversement.

3. Véhicule conforme à la revendication 1 ou 2,
**caractérisé en ce que**
dans les joues latérales avant (9, 10) est respectivement installé au moins un airbag.
